Europäisches Patentamt

**European Patent Office**

**Office européen des brevets**

(11) Veröffentlichungsnummer: **0 191 147**
**B1**

# (12) EUROPÄISCHE PATENTSCHRIFT

(45) Veröffentlichungstag der Patentschrift:
**11.05.88**

(21) Anmeldenummer: **85114540.9**

(22) Anmeldetag: **15.11.85**

(51) Int. Cl.⁴: **F 24 H 1/28,** F 23 M 9/00

(54) Heizkessel für Öl- oder Gasfeuerung.

(30) Priorität: **29.01.85 DE 8502235 U**

(43) Veröffentlichungstag der Anmeldung:
**20.08.86 Patentblatt 86/34**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**EP - A - 0 106 344**
**DE - B - 1 076 869**
**DE - B - 1 189 223**

(73) Patentinhaber: **Hoval Interliz AG., Austrasse 70,**
**FL-9490 Vaduz-Neugut (LI)**

(72) Erfinder: **Ospelt, Gustav, Dr. hc., Im St. Johanner,**
**FL-9490 Vaduz-Neugut (LI)**

(74) Vertreter: **Louis, Walter, Dipl.-Ing. et al, Patentanwälte**
**Dipl.-Ing. Walter Louis Dipl.-Ing. Günter Louis**
**Stubertal 3, D-4300 Essen 1 (DE)**

**Beschreibung**

Die Erfindung bezieht sich auf einen Heizkessel für Öl- oder Gasfeuerung gemäss dem Oberbegriff des Anspruchs 1.

Ein ähnlicher Heizkessel ist nach der DE-B-1 076 869 bekannt.

Normalerweise werden Heizkessel insbesondere mit einer Brennerfeuerung für Heizöl so ausgebildet und betrieben, dass bei grösstmöglicher Ausnutzung des Brennstoff-Heizwertes (unterer Heizwert) die Abgase den Heizkessel noch mit einer Temperatur um 150°C oder mehr verlassen, damit in dem Schornstein ein genügender Auftrieb und Kaminzug entsteht und auch keine Kaminversottung durch Kondensation des Wasserdampfgehalts in den Abgasen eintritt. Man ist jedoch bestrebt, durch Ausnutzung des Brennwertes (oberer Heizwert) des Brennstoffs den feuerungstechnischen Wirkungsgrad noch weiter zu erhöhen, indem mit sogenannten Brennwertkesseln die Temperatur der Abgase, bevor die Abgase den Heizkessel verlassen bzw. in den Schornstein eintreten, so weit ausgenutzt und abgesenkt wird, dass der Taupunkt der Abgasfeuchtigkeit unterschritten wird und eine die Verdampfungswärme von Wasser freisetzende Kondensation des Wasserdampfanteils in den Abgasen stattfindet.

Der Erfindung liegt die Aufgabe zugrunde, einen Heizkessel zu schaffen, der als Brennwertkessel für den Rauchgaskondensationsbetrieb geeignet ist und angewendet werden kann, der aber auch durch einfache Umwandlung als Heizkessel für den gewöhnlichen Betrieb ohne Kondensatbildung und mit normalen Abgastemperaturen von etwa 150 bis 200°C betrieben werden kann, wo die Schornsteinverhältnisse eine tiefere Temperatur der Abgase beim Austritt aus dem Heizkessel nicht zulassen. Ausgehend von der hierfür günstigen, eingangs genannten Heizkesselbauweise wird die Aufgabe gemäss der Erfindung durch die im kennzeichnenden Teil des Anspruchs 1 enthaltenen Merkmale gelöst. Die Anzahl der von der Brennkammer zum Rauchgassammler abwärts führenden, wassergekühlten Nachschaltheizrohre kann je nach gewünschter oder erforderlicher Leistungsgrösse des Heizkessels varriiert werden. Auch kann in jedem einzelnen Nachschaltheizrohr die Anzahl der topfartigen Leiteinsätze variiert werden, die durch die Erzeugung vieler einzelner kleinerer Rauchgasstrahlen sehr hohe Nachschaltheizflächenbelastungen ermöglichen und sehr hohe Wärmeübergangswerte bewirken. Dadurch ist es möglich, die Abgastemperaturen am Rauchgasaustritt des Heizkessels in einem sehr grossen Bereich zu variieren. Durch Herausnehmen aller topfartigen Leiteinsätze kann der Heizkessel, ohne dass Rauchgaskondensat in ihm auftritt, mit normalen Abgastemperaturen von 150°C oder mehr betrieben werden, wenn dies gewünscht wird oder durch die Schornsteinverhältnisse notwendig gemacht wird. Andererseits können bei voller Bestückung des Nachschaltheizrohres mit den topfartigen Leiteinsätzen über die ganze Rohrlänge die Abgastemperaturen so tief auf beispielsweise etwa 30 bis 40°C gesenkt werden, dass zumindest in der unteren Hälfte des Nachschaltheizrohres der Taupunkt unterschritten wird und eine Rauchgaskondensation eintritt. Dadurch wird im Heizkessel ein beträchtlicher Teil der Verdampfungswärme des im Rauchgas enthaltenen Wasserdampfes zurückgewonnen und der Kesselwirkungsgrad erheblich erhöht. Ausserdem führt die Bildung und Zurückhaltung von Rauchgaskondensat im Rauchgas- und Kondensatsammler zu einer Verminderung des Schadstoffgehalts der in den Schornstein abgelassenen Abgase. Selbstverständlich setzt die Herbeiführung einer Rauchgaskondensation im Heizkessel voraus, dass die mit dem Heizkessel verbundene Warmwasserheizanlage mit so niedrigen Wassertemperaturen betrieben werden kann, dass die Rücklauftemperatur des von der Heizanlage in den Heizkessel zurückgelangenden Heizwassers unter der bei Kondensationsbetrieb im Heizkessel zu unterschreitenden Taupunkttemperatur liegt.

Vorteilhafte weitere Ausgestaltungsmerkmale des Heizkessels sind in den Unteransprüchen angegeben.

In der Zeichnung ist ein Ausführungsbeispiel des erfindungsgemässen Heizkessels dargestellt. Es zeigen:

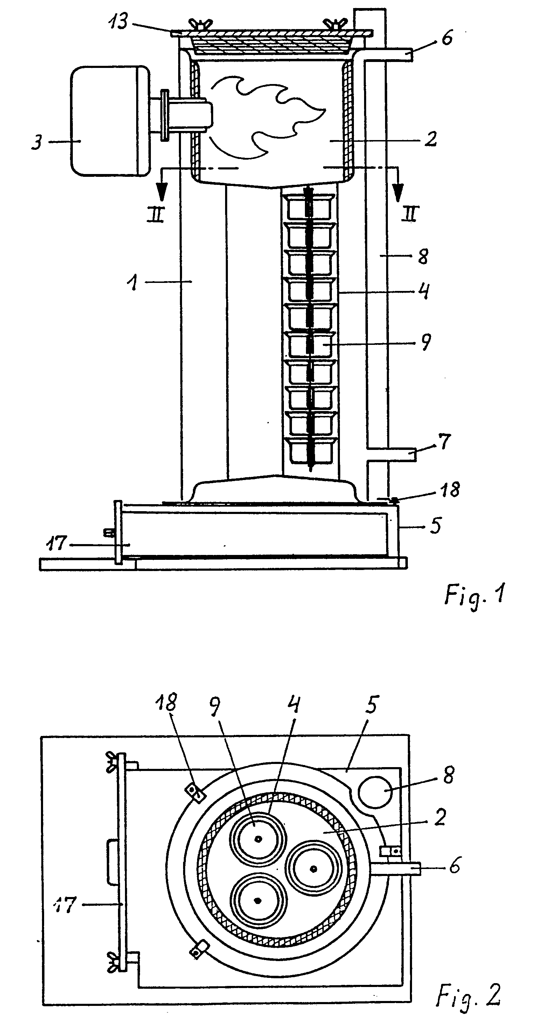

Fig. 1 einen vertikalen Längsschnitt des Heizkessels;

Fig. 2 einen horizontalen Querschnitt nach der Linie II-II in Fig. 1;

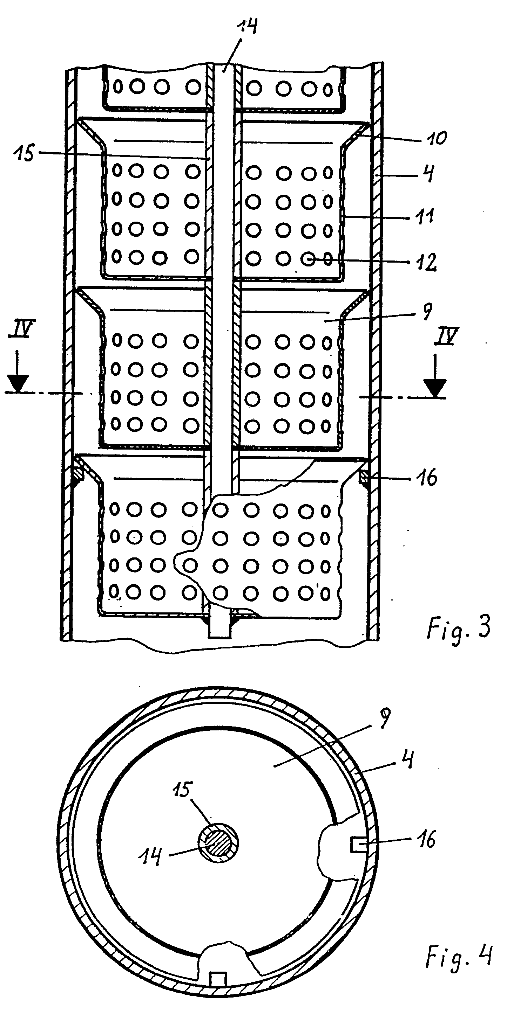

Fig. 3 eine Einzelheit des Heizkessels in vergrössert dargestelltem vertikalen Längsschnitt;

Fig. 4 einen horizontalen Querschnitt nach der Linie IV-IV in Fig. 3.

Der Heizkessel enthält einen senkrechten, zylinderförmigen Wassermantel 1, der am oberen Heizkesselende eine Brennkammer 2 für einen Öl- oder Gasbrenner 3 umgibt. Im Wassermantel 1 führen beim dargestellten Ausführungsbeispiel drei Nachschaltheizrohre 4 abwärts zu einem Rauchgassammler 5 am unteren Heizkesselende. Der Wassermantel 1 hat an seinem oberen Ende den zur Heizungsanlage führenden Vorlaufanschluss 6 und an seinem unteren Ende den von der Heizungsanlage zurückführenden Rücklaufanschluss 7. An den Rauchgassammler 5 ist ein zu einem Schornstein oder dgl. führendes Rauchgasabzugsrohr 8 des Heizkessels angeschlossen. In jedem Nachschaltheizrohr 4 sind topfartige Leiteinsätze 9 angeordnet. Die Leiteinsätze 9 reichen mit ihrem oberen Randteil 10 an die Wandung des Nachschaltheizrohres 4 heran und besitzen an ihrem vertieften Topfteil 11, der von der Rohrwandung radial distanziert ist, radial gerichtete Durchlassöffnungen 12. Die in dem Nachschaltheizrohr 4 abwärts strömenden Rauchgase werden von jedem topfartigen Leiteinsatz 9 in dessen Innenraum hineingelenkt und danach von den Durchlassöffnungen 12 in einer Vielzahl von einzelnen Rauchgasstrahlen radial nach aussen gegen die Wandung des Nachschaltheizrohres gelenkt. Dadurch wird ein ausserordentlich hoher Wärmeübergang von den Rauchgasen an die wassergekühlte Rohrwandung erzeugt und ist es möglich, die Rauchgase auf ihrem Weg von der Brennkammer bis zum Rauchgassammler des Heizkessels so stark mit dem durch den Wassermantel zirkulierenden Kesselwasser, wenn dieses von der Heizungsanlage mit einer Rücklauftemperatur unter 40°C durch den Rücklaufanschluss 7 in den Wassermantel 1 zurückgelangt, abzukühlen, dass im Nachschaltheizrohr 4 eine Kondensation des in den Rauchgasen enthaltenen Wasserdampfes eintritt und hierdurch ein beträchtlicher Teil der Verdampfungswärme des Abgaswasserdampfanteils zurückgewonnen wird. Das Nachschaltheizrohr 4 hat wenigstens in seiner unteren Hälfte eine korrosionsfeste Innenseite, z.B. durch Verwendung von korrosionsfestem Material für das Nachschaltheizrohr oder durch rauchgasseitige Beschichtung des Nachschaltheizrohres mit einer porenfreien, korrosionsfesten Beschichtung, wie z.B. hitzebeständigem mehrschichtigen Email. Die topfartigen Leiteinsätze 9 sind im Nachschaltheizrohr 4 nach oben herausziehbar angeordnet und durch die Brennkammer 2, die an der Kesseloberseite durch einen Putzdeckel 13 verschlossen ist, aus dem Heizkessel herausnehmbar. Die Leiteinsätze 9 sind auf eine zentrale Haltestange 14 aufgeschoben und hierdurch miteinander verbunden, wobei die Haltestange 14 am Boden des untersten Leiteinsatzes 9 lösbar oder unlösbar befestigt ist und mittels abwechselnd mit den Leiteinsätzen auf die Haltestange 14 aufgeschobener Zwischenröhrchen 15 die Höhenabstützung der Leiteinsätze auf der Haltestange 14 erfolgt. Dabei sitzt der unterste Leiteinsatz auf Abstützungen 16 an der Innenseite des Nachschaltheizrohres auf. Wenn der obere Randteil 10 der topfartigen Leiteinsätze möglichst gut an der Wandung des Nachschaltheizrohres 4 anliegt, kann das an der Wandung herunterrinnende Kondenswasser vornehmlich bei den höher gelegenen Leiteinsätzen nochmals in das Innere der gegenüber der Rohrwandung heisseren Leiteinsätze gelangen und dort nochmals verdampfen. Hierdurch wird insbesondere bei der Befeuerung des Heizkessels mit Heizöl der vorteilhafte Effekt erreicht, dass ein wesentlicher Teil des im Rauchgas bzw. im Kondenswasser gebundenen Schwefels schon in den topfartigen Leiteinsätzen als schwefelhaltiger Rückstand ausgeschieden wird und sich als Kruste auf dem Topfboden der Leiteinsätze ansammelt. Die Kruste lässt sich aus jedem einzelnen Leiteinsatz in periodischen Reinigungsabständen gut entfernen, da die auf der Haltestange 14 angeordnete Leiteinsatzsäule nach dem Herausziehen aus dem Nachschaltheizrohr für Reinigungszwecke leicht auseinandergenommen werden kann. Durch die einfache Herausnehmbarkeit der Leiteinsätze 9 aus dem Nachschaltheizrohr 4 respektive aus dem Heizkessel kann der Heizkessel auch bequem auf üblichen Kesselbetrieb ohne Rauchgaskondensation umgestellt werden, z.B. bei Schornsteinverhältnissen, die beim Eintritt der Abgase in den Schornstein keine tiefere Temperatur als die normalen Abgastemperaturen von etwa 150 bis 200°C zulassen.

Der Rauchgassammler 5 ist unter der Einmündung des Nachschaltheizrohres 4 mit einem eine korrosionsfeste Innenseite aufweisen, entleerbaren Kondensatauffangraum 17 ausgebildet, in den das in den Nachschaltheizrohren herunterrinnende Kondenswasser abtropft. Das Rauchgasabzugsrohr 8 ist vertikal verlaufend an die Oberseite des Rauchgassammlers 5 angeschlossen, und der Kondensatauffangraum 17 erstreckt sich im Rauchgassammler auch bis unter die Einmündung des Rauchgasabzugrohres, so dass bei eventuell im Rauchgasabzugrohr noch auftretender Kondensationserscheinung das entstehende Kondensat aus dem Rauchgasabzugrohr in den Kondensatauffangraum zurücktropfen kann. Der Rauchgassammler 5 besteht aus einem separat hergestellten Kasten, der abdichtend und mittels lösbarer Klemmverbindungen 18 abnehmbar an das untere Heizkesselende angeschlossen ist. Durch diese zweiteilige Bauweise des Heizkesselkörpers und des Rauchgassammlers ist es leicht möglich, den Rauchgassammler bzw. dessen Wandungen für sich allein zum Zwecke einer korrosionsfesten Ausbildung mit einer säurefesten Oberflächenbeschichtung zu versehen und herzustellen. Um auch schlammartige Absetzungen im Kondensatauffangraum einfach und vollständig entfernen zu können, ist der Kondensatauffangraum 17 als eine aus dem Rauchgassammler 5 herausziehbare Sammlerschublade ausgebildet. Kondenswasser kann gegebenenfalls ohne Herausziehen bzw. Öffnen der Sammlerschublade durch den Kondensatablaufstutzen der Sammlerschublade beispielsweise in eine ausserhalb des Heizkessels befindliche Neutralisationsvorrichtung abgelassen werden.

### Patentansprüche

1. Heizkessel für Öl- oder Gasfeuerung mit einem senkrechten, etwa zylinderförmigen Wassermantel (1), mit einer Brennkammer (2) für einen Brenner (3) am oberen Heizkesselende und mit wenigstens einem im Wassermantel (1) von der Brennkammer (2) zu einem Rauchgassammler (5) am unteren Heizkesselende abwärts führenden Nachschaltheizrohr (4), dadurch gekennzeichnet, dass das Nachschaltheizrohr (4) übereinander angeordnete topfartige Leiteinsätze (9) enthält, deren oberer Randteil (10) an die Wandung des Nachschaltheizrohres angrenzt und deren von der Rohrwandung radial distanzierter vertiefter Topfteil (11) radial gerichtete Durchlassöffnungen (12) für eine Mehrzahl von gegen die Rohrwandung gerichteten einzelnen Rauchgasstrahlen aufweist, wobei das Nachschaltheizrohr wenigstens in der unteren Hälfte seiner Rohrlänge eine korrosionsfeste Innenseite hat, und dass der Rauchgassammler (5) unter der Einmündung des Nachschaltheizrohres (4) einen entleerbaren Kondensatauffangraum (17) mit korrosionsfester Innenseite aufweist.

2. Heizkessel nach Anspruch 1, dadurch gekennzeichnet, dass die topfartigen Leiteinsätze (9) im Nachschaltheizrohr (4) nach oben herausziehbar angeordnet sind und durch die Brennkammer (2) aus dem Heizkessel herausnehmbar sind.

3. Heizkessel nach Anspruch 2, dadurch gekennzeichnet, dass die topfartigen Leiteinsätze (9) durch eine Haltestange (14) miteinander verbunden sind und der unterste Leiteinsatz auf Abstützungen (16) an der Innenseite des Nachschaltheizrohres aufsitzt.

4. Heizkessel nach Anspruch 1, dadurch gekennzeichnet, dass der Kondensatauffangraum (17) aus einer aus dem Rauchgassammler (5) herausziehbaren Sammlerschublade besteht.

5. Heizkessel nach Anspruch 1 oder 4, dadurch gekennzeichnet, dass der Rauchgassammler (5) aus einem abnehmbar und abdichtend an das untere Heizkesselende angeschlossenen Kasten besteht.

6. Heizkessel nach Anspruch 1 oder 4, dadurch gekennzeichnet, dass sich der Kondensatauffangraum (17) im Rauchgassammler (5) bis unter die Einmüdung eines an die Rauchgassammleroberseite angeschlossenen, vertikal verlaufenden Rauchgasabzugrohrs (8) des Heizkessels erstreckt.

**Claims**

1. A heating boiler for oil or gas firing having: a vertical substantially cylindrical water jacket (1); a combustion chamber (2) for a burner (3) at the top end of the heating boiler; and at least one ancillary heating tube (4) extending in the water jacket (1) from the combustion chamber (2) downwards to a flue gas collector (5) at the bottom end of the heating boiler, characterized in that the ancillary heating tube (4) contains pot-like inserts (9) disposed one above the other whose upper edge portion (10) adjoins the wall of the ancillary heating tube and whose pot portion (11), at a radial distance from the tube wall, has radially directed transfer apertures (12) for a plurality of individual flue gas jets directed against the tube wall, the ancillary heating tube having at least in the lower half of its length a corrosion-resistant inside, the flue gas collector (5) having below the mouth of the ancillary heating tube (4) an emptyable condensate interception chamber (17) having a corrosion-resistant inside.

2. A heating boiler according to claim 1, characterized in that the pot-like inserts (9) are disposed in the ancillary heating tube (4) to be drawn out upwards and can be removed from the heating boiler through the combustion chamber (2).

3. A heating boiler according to claim 2, characterized in that the pot-like inserts (9) are interconnected via a retaining rod (14), and the lowest guide insert is borne on supports (16) on the inside of the ancillary heating tube.

4. A heating boiler according to claim 1, characterized in that the condensate interception chamber (17) comprises a collector drawer which can be pulled out of the flue gas collector (5).

5. A heating boiler according to claims 1 or 4, characterized in that the flue gas collector (5) comprises a removable box connected hermetically to the bottom end of the heating boiler.

6. A heating boiler according to claims 1 or 4, characterized in that the condensate interception chamber (17) extends in the flue gas collector (5) as far as below the mouth of a vertically extending flue gas discharge pipe (8) of the heating boiler connected to the top side of the flue gas collector.

**Revendications**

1. Chaudière à gaz ou à huile comportant une chemise d'eau (1) verticale, sensiblement cylindrique, une chambre de combustion (2) pour un brûleur (3) situé à l'extrémité supérieure de la chaudière et au moins un tube chauffant (4) monté dans la chemise d'eau (1) et conduisant de la chambre de combustion (2) à un collecteur de fumées (5) situé à l'extrémité inférieure de la chaudière, caractérisée en ce que le tube chauffant (4) contient des pièces d'insertion conductrices (9) en forme de pots qui sont insérées les unes au-dessus des autres, dont le bord supérieur (10) est au contact de la paroi de tube chauffant et dans lesquelles la partie basse (11) du pot qui, dans le sens radial, est située à une certaine distance de la paroi du tube, comporte des ouvertures de passage (12) orientées radialement pour plusieurs jets de fumée dirigés vers la paroi du tube, le tube chauffant comportant, au moins sur la moitié inférieure de sa longueur, un côté intérieur résistant à la corrosion, et en ce que le collecteur de fumées (5) comporte, sous l'orifice du tube chauffant (4), une cavité (17) qui reçoit les condensats et peut être vidangée et qui comporte un côté intérieur résistant à la corrosion.

2. Chaudière selon la revendication 1, caractérisée en ce que les pièces d'insertion conductrices (9) en forme de pots sont insérées dans le tube chauffant (4) de manière à pouvoir être tirées vers le haut et extraits de la chaudière par la chambre de combustion (2).

3. Chaudière selon la revendication 2, caractérisée en ce que les pièces d'insertion conductrices (9) en forme de pots sont reliées les unes aux autres par une tige de maintien (14) et que la pièce de guidage qui est insérée le plus bas prend appui sur des supports (16) situés sur le côté du tube chauffant.

5. Chaudière selon la revendication 1, caractérisée en ce que la cavité (17) qui reçoit les condensats est constituée par un tiroir collecteur qui peut être tiré hors du collecteur de fumées (5).

5. Chaudière selon l'une des revendications 1 ou 4, caractérisée en ce que le collecteur de fumées (5) est constitué par un caisson amovible et relié d'une manière étanche à l'extrémité inférieure de la chaudière.

6. Chaudière selon l'une des revendications 1 ou 4, caractérisée en ce que la cavité (17) qui reçoit les condensats s'étend, dans le collecteur de fumées (5), jusque sous l'orifice d'un tube (8) d'évacuation des fumées de la chaudière qui est vertical et est relié au côté supérieur du collecteur de fumées.

Fig. 1

Fig. 2

14

15 —————— 10

——— 4

——— 11

——— 12

——— 9

IV          IV

———— 16

**Fig. 3**

9

15        4

14        16

**Fig. 4**